# EUROPÄISCHE PATENTSCHRIFT

(11) **EP 1 291 557 B1**
(45) Veröffentlichungstag und Bekanntmachung des Hinweises auf die Patenterteilung: **28.12.2005**
(21) Anmeldenummer: 02017341.5
(22) Anmeldetag: 02.08.2002
(51) Int. Cl.: B60K 17/16, F16H 48/00

(54) **Verteilergetriebe für Fahrzeuge**
Power divider for vehicles
Boîte de vitesse intermédiaire pour véhicules

(30) Priorität: 07.09.2001 DE 10143886
(43) Veröffentlichungstag der Anmeldung: 12.03.2003
(73) Patentinhaber: Bayerische Motoren Werke Aktiengesellschaft, 80809 München (DE)
(72) Erfinder: Greil, Jürgen, 80801 München (DE)

(56) Entgegenhaltungen:
- EP-A- 0 602 365
- US-A- 1 185 174
- US-A- 1 984 179
- US-A- 4 787 468
- US-A1- 2002 003 058
- BEITZ W, KÜTTNER K-H: "Dubbel: Taschenbuch für den Maschinenbau" 1990, SPRINGER-VERLAG , BERLIN, DE , XP002282982 * Seite G77, Spalte 1 - Seite G78, Spalte 1 *
- PATENT ABSTRACTS OF JAPAN Bd. 0130, Nr. 76 (M-800), 21. Februar 1989 (1989-02-21) & JP 63 275430 A (KANZAKI KOKYUKOKI MFG CO LTD), 14. November 1988 (1988-11-14)

## Beschreibung

Die vorliegende Erfindung betrifft ein Verteilergetriebe für Fahrzeuge gemäß dem Oberbegriff des Patentanspruches 1.

Ein derartiges Verteilergetriebe ist aus der US 4 787 468 bekannt. Weitere Verteilergetriebe sind aus der US 1 984 179, das als nächstliegender Stand der Technik angesehen ist, Patent Abstracts of Japan Nr. 6375430 sowie aus der EP 602 365 A2 bekannt.

Die DE 198 39 481 A1 beschreibt ein Hinterachsverteilergetriebe für Kraftfahrzeuge, mit einem durch eine Kardan- bzw. Gelenkwelle angetriebenen Ritzel, welches mit einem Tellerrad kämmt. Das Tellerrad wiederum treibt ein Ausgleichsgetriebe an, von dem zwei Abtriebswellen abzweigen, die auf gegenüberliegenden Seiten aus dem Verteilergetriebe herausgeführt sind. Das Tellerrad weist einen Zahnkranz und einen Zahnkranzhalter auf, der durch das Gehäuse des Ausgleichsgetriebes gebildet ist. Der Zahnkranzhalter ist außermittig bezüglich des Ausgleichsgetriebes angeordnet. Der Zahnkranz des Tellerrades und das Ritzel sind auf derjenigen Seite des Zahnkranzträgers angeordnet, die der "Mittelebene" des Ausgleichsgetriebes zugewandt ist. Die Ritzelwelle ist bei diesem Verteilergetriebe mit zwei zweireihigen Tandem-Schrägkugellagern gelagert, die in O-Anordnung angestellt sind. Das erste Schrägkugellager ist unmittelbar am Ritzel und das zweite in einem Abstand vom Ritzel auf der Ritzelwelle angeordnet. Das Ritzel ist also "fliegend" gelagert.

Bei den meisten herkömmlichen Fahrzeugen mit Hinterachsantrieb verläuft die Gelenkwelle im Bereich des "Mitteltunnels", das heißt im wesentlichen in Fahrzeugmitte vom Wechselgetriebe zum Verteilergetriebe nach hinten.

Bei manchen Fahrzeugen, wie zum Beispiel dem in der EP 0901 423 B1 beschriebenen Allradfahrzeug, verläuft die Gelenkwelle seitlich versetzt zur Fahrzeugmittellängsebene. Dementsprechend ist dort das Verteilergetriebe an der Hinterachse ebenfalls außermittig angeordnet. Aufgrund der außermittigen Anordnung des Verteilergetriebes werden an der Hinterachse zwei unterschiedlich lange Abtriebswellen benötigt, was einen konstruktiven Mehraufwand und zusätzliche Kosten verursacht.

Aufgabe der Erfindung ist es, ein verbessertes Verteilergetriebe für Fahrzeuge mit seitlich versetzt angeordneter Gelenkwelle zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Verteilergetriebe, bei dem der Zahnkranz des Tellerrades und das damit in Eingriff stehende Ritzel auf derjenigen Seite des Zahnkranzträgers des Tellerrades angeordnet sind, die dem Ausgleichsgetriebe des Verteilergetriebes abgewandt ist. Vereinfacht ausgedrückt sind das Ritzel und der Zahnkranz des Tellerrades im Vergleich zu einem herkömmlichen Ausgleichsgetriebe "gespiegelt" angeordnet, d.h. auf der "anderen Seite" des Zahnkranzträgers des Tellerrades.

Aus der "gespiegelten" Anordnung des Tellerradzahnkranzes und des Ritzels ergeben sich sehr wesentliche konstruktive Vorteile. Zum einen kann allein durch die gespiegelte Anordnung des Ritzels und des Tellerradzahnkranzes bereits ein gewisser seitlicher Versatz der Gelenkwelle "überbrückt" bzw. ausgeglichen werden. Ein weiterer Vorteil besteht darin, dass das Ritzel nicht mehr wie bei der DE 198 39 481 A 1 "fliegend" gelagert werden muss. Beim Stand der Technik steht der Ritzelkopf nämlich fast am Verteilergetriebe an. Demgegenüber ist bei der "gespiegelten Anordnung" gemäß der Erfindung zwischen dem Ritzelkopf und den Abtriebswellen hinreichend Bauraum vorhanden, in dem ein Ritzellager angeordnet werden kann, was unter dem Gesichtspunkt der Steifigkeit der Ritzellagerung von großem Vorteil ist.

In der Erfindung weist die Ritzelwelle zwei hohlzylindrische Ausnehmung auf, in die jeweils ein Ritzellager eingesetzt ist. Das eine Ritzellager kann unmittelbar "unter" der Ritzelverzahnung und das andere Ritzellager "kurz hinter" der Ritzelverzahnung angeordnet werden. Dies ermöglicht eine extrem steife Ritzellagerung, was aus vielerlei Gründen von Vorteil ist. Mit einer sehr steifen Lagerung erhöhen sich beispielsweise die Getriebelebensdauer und der Getriebewirkungsgrad. Gleichzeitig verringern sich dadurch die Geräuschemissionen.

Für die Lagerung des Ritzels werden vorzugsweise in O-Anordnung eingebaute Schrägkugellager verwendet, wodurch sich die Lagersteifigkeit und der Wirkungsgrad des Verteilergetriebes weiter verbessern lässt.

Bei verschiedenen neuartigen Fahrzeugkonzepten wird darüber nachgedacht, den Mitteltunnel, das heißt den Mittellängsbereich des Fahrzeugs zur Unterbringung diverser "Fahrzeugkomponenten" zu verwenden, wie z.B. des Kraftstofftanks. Eine derartige Anordnung ist nämlich insbesondere hinsichtlich der "Derivatfähigkeit" von Vorteil. Derivatfähigkeit bedeutet, dass ein und dieselbe Grundplattform für verschiedene Modellvarianten, zum Beispiel Limousine, Kombi, Coupe, ohne bzw. mit nur geringfügigen Umkonstruktionen einsetzbar ist.

Bei derartigen Fahrzeugen verläuft die Gelenkwelle seitlich versetzt zur Mittellängsachse des Fahrzeugs, zum Beispiel 200mm seitlich davon. Gemäß der Erfindung ist dann zur "Abstandsüberbrückung" zwischen der versetzt angeordneten Gelenkwelle und dem Verteilergetrieberitzel im Bereich der Hinterachse ein Zahnrad oder ein Kettentrieb vorgesehen. Das Verteilergetriebe kann also auch dann fahrzeugmittig angeordnet werden, wenn die Gelenkwelle relativ weit außermittig verläuft. Dies hat den großen Vorteil, dass zwei gleich lange bzw. sogar identische Abtriebswellen verwendet werden können.

Im folgenden wird die Erfindung anhand eines Ausführungsbeispiels im Zusammenhang mit der Zeichnung näher erläutert. Es zeigen:
- Figur 1: eine schematische Draufsicht auf das Verteilergetriebe gemäß der Erfindung;
- Figur 2: eine Seitenansicht des Verteilergetriebes der Figur 1;
- Figur 3: eine schematische perspektivische Darstellung des Verteilergetriebes der Figuren 1 und 2; und
- Figur 4: eine Schnittdarstellung des Verteilergetriebes entsprechend Figur 1.

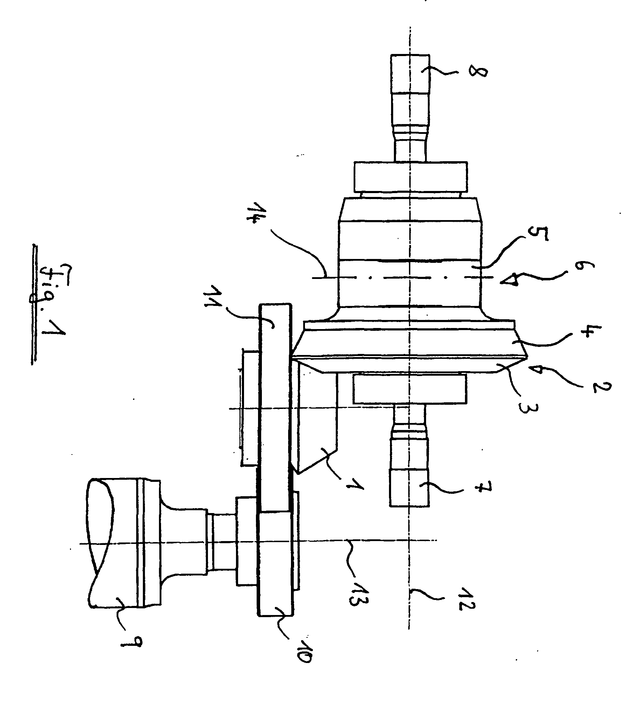

**Figur 1** zeigt in schematischer Darstellung ein Hinterachsverteilergetriebe eines Fahrzeugs mit einem Antriebsritzel 1, das mit einem Tellerrad 2 kämmt. Das Tellerrad 2 ist durch einen Zahnkranz 3 und einen Zahnkranzträger 4 gebildet. Der Zahnkranzträger 4 ist drehfest an einem Gehäuse 5 eines Ausgleichsgetriebes 6 befestigt.

Vom Ausgleichsgetriebe 6 bzw. vom Verteilergetriebe zweigen auf gegenüberliegenden Seiten zwei Abtriebswellen 7, 8 ab, die mit hier nicht dargestellten Rädern des Fahrzeugs verbunden sind.

Der Antrieb des Ritzels 1 erfolgt über eine mit dem Fahrzeuggetriebe (nicht dargestellt) verbundene Gelenkwelle 9, an deren Ende ein Zahnrad 10 vorgesehen ist, das mit einem Zahnrad 11 kämmt, welches mit dem Ritzel 1 verbunden ist.

Wie aus **Figur 1** ersichtlich ist, ist die Gelenkwelle 9 seitlich, das heißt in Richtung der Längsachse 12 der Abtriebswellen 7, 8 versetzt angeordnet. Der Abstand zwischen der Längsachse 13 und der "Mitte" 14 des Ausgleichsgetriebes 6 bzw. des Verteilergetriebes beträgt beispielsweise 200mm.

Zum "Ausgleich" dieses seitlichen Versatzes der Gelenkwelle 9 sind der Zahnkranz 3 des Tellerrades 2 und das Ritzel 1 im Vergleich zu herkömmlichen Verteilergetrieben bezüglich des Zahnkranzträgers 4 "gespiegelt" angeordnet. Das heißt, der Zahnkranz 3 und das Ritzel 1 sind auf derjenigen Seite des Zahnkranzträgers 4 angeordnet, die dem Verteilergetriebe 6 bzw. der Mitte 14 des Verteilergetriebes 6 abgewandt ist.

Ein weiterer Unterschied im Vergleich zu herkömmlichen Verteilergetrieben besteht darin, dass die Gelenkwelle 9 hier nicht koaxial mit dem Ritzel 1 verbunden ist, sondern über die Zahnradstufe 10, 11. Die Zahnradstufe 10, 11 dient einerseits der "Überbrückung" des seitlichen Versatzes der Gelenkwelle. Andererseits ermöglicht sie eine zusätzliche Übersetzung.

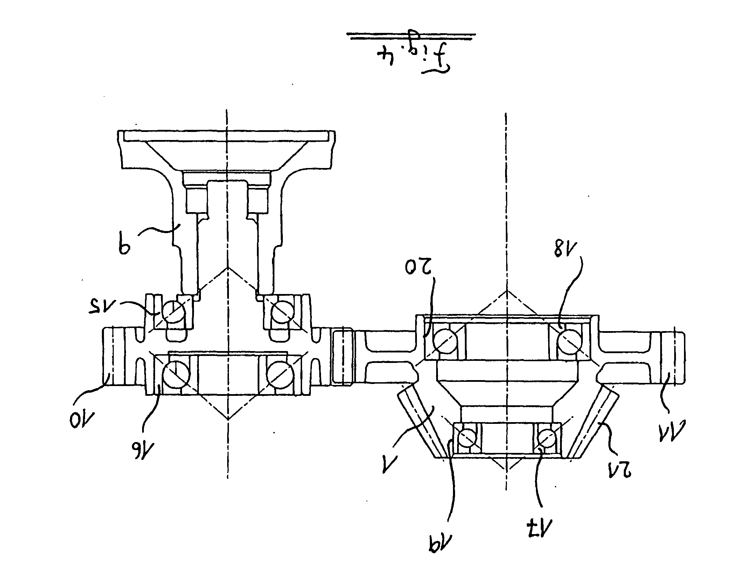

Durch die "gespiegelte Anordnung" des Zahnkranzes 3 und des Ritzels 1 ergeben sich noch weitere wesentliche Vorteile, die im Zusammenhang mit **Figur 4** näher erläutert werden.

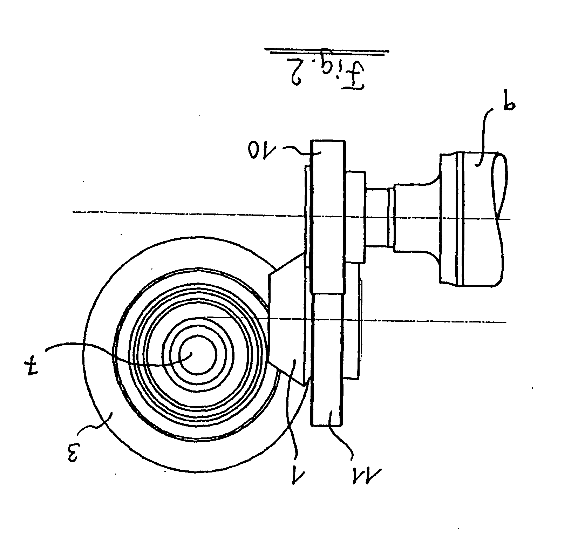

**Figur 2** zeigt eine Seitenansicht des Verteilergetriebes der Figur 1. In dieser Darstellung ist zu erkennen, dass die Gelenkwelle 9 unterhalb der Abtriebswellen 7, 8 verläuft. Diese Höhendifferenz wird durch die Zahnradstufe 10, 11 und das mit dem Zahnkranz 3 kämmende Ritzel 1 ausgeglichen.

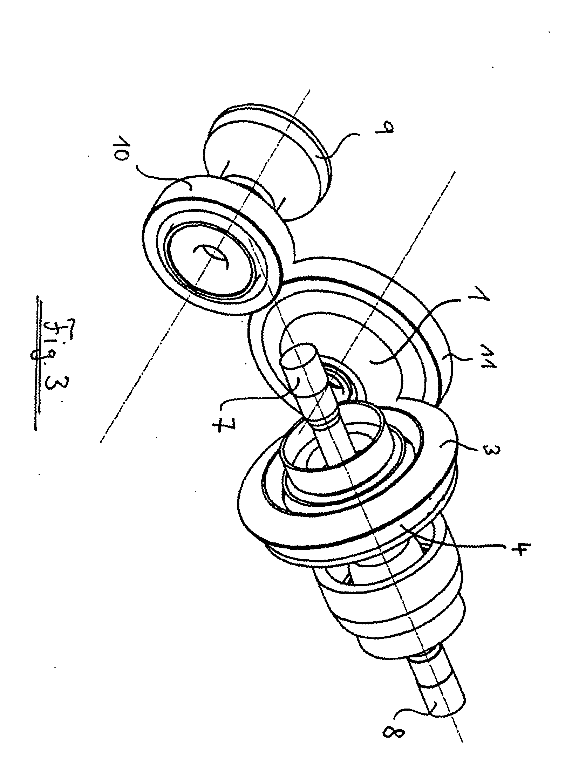

**Figur 3** zeigt eine schematische perspektivische Darstellung des Verteilergetriebes der **Figuren 1 und 2**. Auch hier sind der seitliche Versatz und der Höhenversatz der Gelenkwelle 9 deutlich zu erkennen.

**Figur 4** zeigt in schematischer Darstellung einen Schnitt durch das Verteilergetriebe im Bereich des Ritzels 1 und der Gelenkwelle 9. Das Ende der Gelenkwelle 9 ist mit dem Zahnrad 10 verbunden, das hier durch zwei nur schematisch dargestellte in O-Anordnung angestellte Schrägkugellager 15, 16 gelagert ist. Das Zahnrad 10 kämmt mit dem Zahnrad 11, das hier einstückig mit dem Ritzel 1 verbunden ist.

Das Ritzel 1 ist durch zwei Schrägkugellager gelagert, nämlich durch ein erstes Schrägkugellager 1 und ein zweites Schrägkugellager 2, die ebenfalls in O-Anordnung angestellt sind. Wie aus Figur 4 ersichtlich ist, ist das Ritzel 1 ein "Hohlritzel". Das erste Schrägkugellager 17 ist nämlich in einer Ausnehmung 19 und das zweite Schrägkugellager 18 ist in einer Ausnehmung 20 des Ritzels 1 angeordnet. Das erste Schrägkugellager 17 sitzt unmittelbar unter dem Ritzelzahnkranz 21. Das zweite Schrägkugellager 18 hingegen sitzt kurz hinter dem Ritzelzahnkranz 21, das heißt im Bereich der hinteren Hälfte des Zahnrades 11.

Die in **Figur 4** dargestellte Ritzellagerung unterscheidet sich ganz grundlegend von den Ritzellagerungen herkömmlicher Verteilergetriebe. Das Ritzel 1 ist nämlich nicht fliegend gelagert. Durch die beiden Schrägkugellager 17, 18, insbesondere durch das unmittelbar unter dem Ritzelzahnkranz 21 sitzende Schrägkugellager 17 ergibt sich eine extrem steife Ritzellagerung. Durch die beidseitige Lagerung des Ritzels 1 ergibt sich gegenüber einem fliegend gelagerten Ritzel eine deutliche Verschleißminderung und eine höhere Lebensdauer sowie ein besserer Getriebewirkungsgrad.

## Patentansprüche

1. Verteilergetriebe für Fahrzeuge mit
einem Ritzel (1), das mit einem Tellerrad (2) kämmt, welches durch einen Zahnkranz (3) und einen Zahnkranzträger (4) gebildet und zum Antrieb eines Ausgleichsgetriebes (6) vorgesehen ist,
wobei das Ritzel (1) und der Zahnkranz (3) des Tellerrades (2) auf derjenigen Seite des Zahnkranzträgers (4) angeordnet sind, die einer Mittelebene (14) des Ausgleichsgetriebes (6) abgewandt ist, wobei
das Ritzel (1) durch zwei unmittelbar im Bereich des Ritzels (1) angeordnete Lager (17, 18) gelagert ist, **dadurch gekennzeichnet, dass**
ein erstes Lager (17) unmittelbar im Bereich des Ritzelzahnkranzes (21) angeordnet ist und das zweite Lager (18) hinter dem Ritzelzahnkranz (21) angeordnet ist und
das Ritzel (1) hohlzylindrische Ausnehmungen (19, 20) aufweist, in denen die beiden Lager (17, 18) angeordnet sind.

2. Verteilergetriebe nach Anspruch 1, **dadurch gekennzeichnet, dass** der Zahnkranzträger (4) bezüglich des Ausgleichsgetriebes außermittig angeordnet ist.

3. Verteilergetriebe nach Anspruch 1 oder 2, **dadurch gekennzeichnet, dass** zwei Abtriebswellen (7, 8) vorgesehen sind, die auf gegenüberliegenden Seiten vom Verteilergetriebe abzweigen.

4. Verteilergetriebe nach Anspruch 3, **dadurch gekennzeichnet, dass** das Verteilergetriebe fahrzeugmittig angeordnet ist und dass die Abtriebswellen (7,8) gleich lang sind.

5. Verteilergetriebe nach einem der Ansprüche 1 bis 4, **dadurch gekennzeichnet, dass** das Ritzel (1) über eine Gelenkwelle (9) angetrieben wird, die in einer Ebene verläuft, die im wesentlichen senkrecht zu den Abtriebswellen (7, 8) und seitlich versetzt bezüglich einer Mittelebene (14) des Verteilergetriebes verläuft.

6. Verteilergetriebe nach einem der Ansprüche 1 bis 5, **dadurch gekennzeichnet, dass** die Gelenkwelle (9) bezüglich einer Fahrzeugmittellängsebene (14) um 150mm bis 250 mm seitlich versetzt angeordnet ist.

7. Verteilergetriebe nach einem der Ansprüche 1 bis 6, **dadurch gekennzeichnet, dass** die Gelenkwelle (9) bezüglicher einer Fahrzeugmittellängsachse (14) 200mm seitlich versetzt angeordnet ist.

8. Verteilergetriebe nach einem der vorangehenden Ansprüche, **dadurch gekennzeichnet, dass** das erste Lager (17) unmittelbar unter dem Ritzelzahnkranz (21) angeordnet ist.

9. Verteilergetriebe nach einem der vorangehenden Ansprüche, **dadurch gekennzeichnet, dass** die Lager (17, 18) Schrägkugellager sind, die in O-Anordnung angeordnet sind.

10. Verteilergetriebe nach einem der vorangehenden Ansprüche, **dadurch gekennzeichnet, dass** das Ritzel (1) über eine Drehmomentenübertragungseinrichtung (10, 11) mit der Gelenkwelle (9) verbunden ist.

11. Verteilergetriebe nach Anspruch 10, **dadurch gekennzeichnet, dass** die Drehmomentenübertragungseinrichtung (10, 11) eine Zahnradstufe ist.

12. Verteilergetriebe nach Anspruch 11, **dadurch gekennzeichnet, dass** ein Zahnrad (10) der Zahnradstufe mit einem Ende der Gelenkwelle (9) und das andere Zahnrad (11) mit dem Ritzel (1) verbunden ist.

13. Verteilergetriebe nach Anspruch 10, **dadurch gekennzeichnet, dass** die Drehmomentenübertragungseinrichtung durch einen Kettentrieb gebildet ist.

## Claims

1. A power divider for vehicles, comprising
a pinion (1) which meshes with a ring gear (2), which is formed of a toothed rim (3) and a toothed-rim holder (4) and is for driving a differential gear (6),
wherein the pinion (1) and the toothed rim (3) of the ring gear (2) are disposed on that side of the toothed-rim holder (4) which is remote from a centre plane (14) of the differential gear (6),
wherein the pinion (1) is mounted on two bearings (17, 18) in the immediate neighbourhood of the pinion (1), **characterised in that** a first bearing (17) is disposed directly in the region of the toothed rim (21) and the second bearing (18) is disposed behind the toothed rim (21) and
the pinion (1) has hollow cylindrical recesses (19, 20) in which the two bearings (17, 18) are disposed.

2. A power divider according to claim 1, **characterised in that** the toothed-rim holder (4) is mounted eccentrically relative to the differential gear.

3. A power divider according to claim 1 or 2, **characterised in that** two driven shafts (7, 8) are provided and branch off on opposite sides of the power divider.

4. A power divider according to claim 3, **characterised in that** the power divider is disposed in the middle of the vehicle and the driven shafts (7, 8) are of equal length.

5. A power divider according to any of claims 1 to 4, **characterised in that** the pinion (1) is driven by a drive shaft (9) which extends in a plane substantially at right angles to the driven shafts (7, 8) and is laterally offset relative to a centre plane (14) of the power divider.

6. A power divider according to any of claims 1 to 5, **characterised in that** the driven shaft (9) is laterally offset by 150 to 250 mm relative to a longitudinal central plane (14) of the vehicle.

7. A power divider according to any of claims 1 to 6, **characterised in that** the drive shaft (9) is laterally offset by 200 mm relative to a longitudinal central axis (14) of the vehicle.

8. A power divider according to any of the preceding claims, **characterised in that** the first bearing (17) is disposed immediately under the toothed rim (21) of the pinion.

9. A power divider according to any of the preceding claims, **characterised in that** the bearings (17, 18) are angular ball bearings in an ○ arrangement.

10. A power divider according to any of the preceding claims, **characterised in that** the pinion (1) is connected to the drive shaft (9) by a torque transmission device (10, 11).

11. A power divider according to claim 10, **characterised in that** the torque transmission device (10, 11) is a gearwheel stage.

12. A power divider according to claim 11, **characterised in that** one gearwheel (10) of the gearwheel stage is connected to an end of the drive shaft (9) and the other gearwheel (11) is connected to the pinion.

13. A power divider according to claim 10, **characterised in that** the torque transmission device is a chain drive.

## Revendications

1. Boîte de transfert pour véhicules, comprenant un pignon (1) qui s'engrène avec une couronne (2) formée par une couronne dentée (3) et par un support de couronne dentée (4) et prévue pour entraîner un différentiel (6), le pignon (1) et la couronne dentée (3) de la couronne (2) étant disposés sur le côté du support de couronne dentée (4) opposé à un plan médian (14) du différentiel (6), le pignon (1) étant logé par l'intermédiaire de deux paliers (17, 18) disposés directement dans la zone du pignon (1),
**caractérisée en ce qu'**
un premier palier (17) est disposé directement dans la zone de la couronne dentée du pignon (21) tandis que le second palier (18) est disposé derrière la couronne dentée du pignon (21), et
le pignon (1) présente des évidements (19, 20) cylindriques creux dans lesquels sont disposés les deux paliers (17, 18).

2. Boîte de transfert selon la revendication 1,
**caractérisée en ce que**
le support de couronne dentée (4) est disposé de façon excentrée par rapport au différentiel.

3. Boîte de transfert selon la revendication 1 ou 2,
**caractérisée en ce qu'**
il est prévu deux arbres de sortie (7, 8) partant de côtés opposés de la boîte de transfert.

4. Boîte de transfert selon la revendication 3,
**caractérisée en ce que**
la boîte de transfert est disposée au milieu du véhicule et les arbres de sortie (7, 8) sont de même longueur.

5. Boîte de transfert selon l'une des revendications 1 à 4,
**caractérisée en ce que**
le pignon (1) est entraîné par l'intermédiaire d'un arbre de transmission (9) qui s'étend dans un plan s'étendant pour l'essentiel perpendiculairement aux arbres de sortie (7, 8) et de façon décalée latéralement par rapport à un plan médian (14) de la boîte de transfert.

6. Boîte de transfert selon l'une des revendications 1 à 5,
**caractérisée en ce que**
l'arbre de transmission (9) est disposé de façon décalée latéralement de 150 mm à 250 mm par rapport à un plan longitudinal médian du véhicule (14).

7. Boîte de transfert selon l'une des revendications 1 à 6,
**caractérisée en ce que**
l'arbre de transmission (9) est disposé de façon décalée latéralement de 200 mm par rapport à un axe longitudinal médian du véhicule (14).

8. Boîte de transfert selon l'une des revendications précédentes,
**caractérisée en ce que**
le premier palier (17) est disposé immédiatement en dessous de la couronne dentée du pignon (21).

9. Boîte de transfert selon l'une des revendications précédentes,
**caractérisée en ce que**
les paliers (17, 18) sont des roulements à billes à contacts obliques disposés en O.

10. Boîte de transfert selon l'une des revendications précédentes,
**caractérisée en ce que**
le pignon (1) est relié à l'arbre de transmission (9) par l'intermédiaire d'un dispositif de transmission de couple (10, 11).

11. Boîte de transfert selon la revendication 10,
**caractérisée en ce que**
le dispositif de transmission de couple (10, 11) est un étagement à roues dentées.

12. Boîte de transfert selon la revendication 11,
**caractérisée en ce qu'**
une roue dentée (10) de l'étagement à roue dentée est reliée à une extrémité de l'arbre de transmission (9) tandis que l'autre roue dentée (11) est reliée au pignon (1).

13. Boîte de transfert selon la revendication 10,
**caractérisée en ce que**
le dispositif de transmission de couple est formé par un entraînement à chaîne.
